# EUROPÄISCHE PATENTANMELDUNG

(11) **EP 3 222 835 A1**
(43) Veröffentlichungstag der Anmeldung: **27.09.2017**
(21) Anmeldenummer: 16200496.4
(22) Anmeldetag: 24.11.2016
(51) Int. Cl.: F02B 39/10, F02D 41/00, F02D 11/10, F02B 37/04, F02D 41/10, F02B 37/10

(54) **VERFAHREN ZUM BETREIBEN EINER ANTRIEBSEINRICHTUNG EINES KRAFTFAHRZEUGS SOWIE ENTSPRECHENDE ANTRIEBSEINRICHTUNG**

(30) Priorität: 26.03.2016 DE 102016003752
(71) Anmelder: AUDI AG, 85045 Ingolstadt (DE)
(72) Erfinder: Wilding, Werner, 85137 Walting (DE)

(57) **Zusammenfassung**

Die Erfindung betrifft ein Verfahren zum Betreiben einer Antriebseinrichtung eines Kraftfahrzeugs, die eine Brennkraftmaschine und einen mittels eines Elektromotors antreibbaren Verdichter zur Zuführung von Verbrennungsfrischgas zu der Brennkraftmaschine aufweist. Dabei ist vorgesehen, dass der Verdichter bei einer Leistungserhöhung der Brennkraftmaschine derart mittels des Elektromotors angetrieben wird, dass sich ein aus mehreren unterschiedlichen Drehmomentverläufen (2,3,4) ausgewählter Drehmomentverlauf der Brennkraftmaschine über ihrer Drehzahl (n) einstellt. Die Erfindung betrifft weiterhin eine Antriebseinrichtung für ein Kraftfahrzeug.

## Beschreibung

Die Erfindung betrifft ein Verfahren zum Betreiben einer Antriebseinrichtung eines Kraftfahrzeugs, die eine Brennkraftmaschine und einen mittels eines Elektromotors antreibbaren Verdichter zur Zuführung von Verbrennungsfrischgas zu der Brennkraftmaschine aufweist. Die Erfindung betrifft weiterhin eine Antriebseinrichtung für ein Kraftfahrzeug.

Die Antriebseinrichtung dient dem Antreiben des Kraftfahrzeugs, insoweit also einem Bereitstellen eines auf das Antreiben des Kraftfahrzeugs gerichteten Drehmoments. Die Antriebseinrichtung verfügt hierzu über wenigstens ein Antriebsaggregat, nämlich die Brennkraftmaschine. Neben der Brennkraftmaschine kann selbstverständlich wenigstens ein weiteres Antriebsaggregat, insbesondere eine elektrische Maschine oder dergleichen, vorgesehen sein. Die Antriebseinrichtung weist weiterhin den Verdichter auf, welcher mittels des Elektromotors antreibbar ist und insoweit auch als elektrisch angetriebener Verdichter bezeichnet werden kann.

Der Verdichter dient der Zuführung von Verbrennungsfrischgas zu der Brennkraftmaschine. Hierzu fördert der Verdichter Verbrennungsfrischgas aus Richtung einer Außenumgebung in Richtung der Brennkraftmaschine. Der Verdichter verdichtet das ihn durchströmende Verbrennungsfrischgas und führt es der Brennkraftmaschine auf einem Druckniveau zu, welches höher ist als das unmittelbar stromaufwärts des Verdichters vorliegende Druckniveau. Das Verbrennungsfrischgas kann in Form von Luft, insbesondere Frischluft vorliegen. Im Falle einer Abgasrückführung kann es jedoch auch Abgas enthalten. Der elektrisch angetriebene Verdichter dient insbesondere dem Bereitstellen eines höheren Drehmoments bei niedrigen Drehzahlen, also dem möglichst raschen Erhöhen der Leistung der Brennkraftmaschine.

Es ist Aufgabe der Erfindung, ein Verfahren zum Betreiben einer Antriebseinrichtung vorzuschlagen, welches gegenüber bekannten Verfahren Vorteile aufweist, insbesondere ein komfortableres Fahrverhalten des Kraftfahrzeugs ermöglicht.

Dies wird erfindungsgemäß mit einem Verfahren mit den Merkmalen des Anspruchs 1 erreicht. Dabei ist vorgesehen, dass der Verdichter bei einer Leistungserhöhung der Brennkraftmaschine derart mittels des Elektromotors angetrieben wird, dass sich ein aus mehreren unterschiedlichen Drehmomentverläufen ausgewählter Drehmomentverlauf der Brennkraftmaschine über ihre Drehzahl einstellt.

Unter der Leistungserhöhung der Brennkraftmaschine ist eine Erhöhung des von der Brennkraftmaschine bereitgestellten Drehmoments und/oder ihrer Drehzahl zu verstehen. Soll die Leistungserhöhung durchgeführt werden, beispielsweise aufgrund einer Fahrervorgabe, anhand welcher ein Solldrehmoment für die Brennkraftmaschine ermittelt wird, so kann es vorgesehen sein, den Verdichter anzutreiben, um die der Brennkraftmaschine zugeführte Menge an Verbrennungsfrischgas zu vergrößern und entsprechend die Geschwindigkeit der Leistungserhöhung zu steigern.

Ist lediglich ein einziger Drehmomentverlauf hinterlegt, so entspricht dieser üblicherweise einer maximalen Leistungserhöhung der Brennkraftmaschine. Auf diese Art und Weise kann von der Brennkraftmaschine bereits bei niedrigen Drehzahlen ein hohes Drehmoment bereitgestellt werden. Ein derartiges Verhalten ist jedoch nicht immer erwünscht, beispielsweise falls das Kraftfahrzeug bei niedrigen Geschwindigkeiten bewegt wird oder häufig aus dem Stillstand oder aus einer niedrigen Geschwindigkeit auf eine geringfügig höhere Geschwindigkeit beschleunigt werden soll. Wird hierbei der Verdichter zum Erzielen der maximalen Leistungserhöhung der Brennkraftmaschine betrieben, so kann sich ein ruckartiges Fahrverhalten einstellen, welches von Insassen des Kraftfahrzeugs als unkomfortabel empfunden wird.

Aus diesem Grund sind die mehreren unterschiedlichen Drehmomentverläufe hinterlegt, aus welchen ein Drehmomentverlauf ausgewählt wird. Jeder der Drehmomentverläufe beschreibt einen Drehmomentverlauf der Brennkraftmaschine über ihrer Drehzahl, insoweit also eine Drehmomentenhüllkurve, die für jede Drehzahl das korrespondierende maximal erzielbare Drehmoment der Brennkraftmaschine vorgibt. Es können nun unterschiedliche Drehmomentverläufe für eine Vielzahl von unterschiedlichen Fahrsituationen hinterlegt sein und jeweils der passende Drehmomentverlauf aus den hinterlegten Drehmomentverläufen ausgewählt werden. Anhand des ausgewählten Drehmomentverlaufs wird das für die vorliegende Istdrehzahl der Brennkraftmaschine zulässige Drehmoment ermittelt und - falls das angeforderte Drehmoment größer ist als dieses - an der Brennkraftmaschine eingestellt beziehungsweise der Verdichter derart angetrieben, dass das Drehmoment erreicht wird.

Anders ausgedrückt ist es also vorgesehen, dass aus mehreren unterschiedlichen Drehmomentverläufen ein Drehmomentverlauf, insbesondere entsprechend einer Drehmomenthüllkurve, der Brennkraftmaschine über ihre Drehzahl ausgewählt wird. Bei der Leistungserhöhung der Brennkraftmaschine beziehungsweise falls die Leistungserhöhung vorgenommen werden soll, wird ein Solldrehmoment ermittelt und dieses auf ein Drehmoment begrenzt, dass sich für die Istdrehzahl der Brennkraftmaschine aus dem ausgewählten Drehmomentverlauf ergibt. Nachfolgend wird der Verdichter derart angetrieben, dass sich das nunmehr begrenzte Solldrehmoment einstellt. Insbesondere wird das begrenzte Solldrehmoment hierzu an der Brennkraftmaschine eingestellt und zudem der Verdichter entsprechend angetrieben. Der ausgewählte Drehmomentverlauf wird entsprechend zu einer Begrenzung der Leistungserhöhung der Brennkraftmaschine beziehungsweise zur Begrenzung des von der Brennkraftmaschine bereitgestellten beziehungsweise bereitstellbaren Drehmoments herangezogen.

Eine weitere Ausgestaltung der Erfindung sieht vor, dass einer der Drehmomentverläufe einer maximalen Leistungserhöhung entspricht. Dieser Drehmomentverlauf erlaubt es folglich, die maximale Leistung der Brennkraftmaschine bei jeder Drehzahl abzurufen. Insoweit kann ein sportlicher Fahrbetrieb realisiert werden.

Eine Weiterbildung der Erfindung sieht vor, dass wenigstens einer der Drehmomentverläufe, insbesondere alle Drehmomentverläufe, einen konstanten Drehmomentanstiegsgradient bis hin zu einem Maximaldrehmoment aufweisen. Das Maximaldrehmoment bezeichnet das über alle Drehzahlen hinweg maximale von der Brennkraftmaschine bereitstellbare Drehmoment. Üblicherweise steigt der Drehmomentverlauf der Brennkraftmaschine beziehungsweise steigen die Drehmomentverläufe ausgehend von einem geringen Drehmoment bei niedrigen Drehzahlen bis zu dem Maximaldrehmoment an, welches bei höheren Drehzahlen erzielt wird. Anschließend fällt das erreichbare Drehmoment ausgehend von dem Maximaldrehmoment in Richtung noch höherer Drehzahlen wieder ab.

Wenigstens einer der Drehmomentverläufe beziehungsweise alle Drehmomentverläufe sollen nun über den konstanten Drehmomentanstiegsgradient verfügen, entweder nur in Richtung des Maximaldrehmoments oder sogar bis das Maximaldrehmoment erreicht ist. Unter den Drehmomentanstiegsgradient ist der Gradient des bei der jeweiligen Drehzahl maximal erreichbaren Drehmoments über der Drehzahl zu verstehen. Der konstante Drehmomentanstiegsgradient liegt üblicherweise zwischen einer niedrigeren ersten Drehzahl und einer höheren zweiten Drehzahl vor, wobei bei der zweiten Drehzahl das bei ihr erzielbare Drehmoment dem Maximaldrehmoment entsprechen kann. Die erste kleinere Drehzahl entspricht vorzugsweise einer Leerlaufdrehzahl der Brennkraftmaschine.

Im Rahmen einer weiteren Ausgestaltung der Erfindung ist vorgesehen, dass wenigstens einer der Drehmomentverläufe, insbesondere alle Drehmomentverläufe, einen sich in Richtung höherer Drehmomente verringernden oder vergrößernden Drehmomentanstiegsgradient aufweisen. Entsprechend kann der Drehmomentverlauf auf die jeweilige Fahrsituation besonders gut eingestellt werden. Beispielsweise fällt der Drehmomentanstiegsgradient in Richtung höherer Drehmomente beziehungsweise höherer Drehzahlen kontinuierlich ab, sodass beispielsweise ein sanftes Annähern an das Maximaldrehmoment erreicht wird. Vergrößert sich dagegen der Drehmomentanstiegsgradient in Richtung höherer Drehmomente beziehungsweise höherer Drehzahlen, so kann es vorgesehen sein, dass bei niedrigeren Drehzahlen zunächst lediglich eine geringe Leistungserhöhung der Brennkraftmaschine zugelassen wird, bei höheren Drehmomenten beziehungsweise Drehzahlen dagegen eine stärkere Leistungserhöhung, insbesondere eine maximale Leistungserhöhung.

Eine weitere Ausgestaltung der Erfindung sieht vor, dass der Verdichter allein mittels des Elektromotors angetrieben wird. Grundsätzlich ist es vorstellbar, dass der Verdichter Bestandteil eines Abgasturboladers ist, der mit Hilfe des Elektromotors unterstützend antreibbar ist. Bevorzugt ist der Verdichter jedoch der einzige Verdichter der Brennkraftmaschine, sodass also neben dem Verdichter kein Abgasturbolader vorgesehen ist, oder liegt lediglich zusätzlich zu einem solchen Abgasturboladers oder sogar mehreren Abgasturboladern vor. In jedem dieser Fälle kann der Verdichter ausschließlich mit Hilfe des Elektromotors angetrieben werden.

Im Rahmen einer vorteilhaften Weiterbildung der Erfindung ist vorgesehen, dass der Drehmomentverlauf aus den mehreren Drehmomentverläufen mittels einer Einstellvorrichtung von einem Fahrer des Kraftfahrzeugs auswählbar ist. Die Einstellvorrichtung ist beispielsweise ein Bedienelement, welches in Reichweite des Fahrers des Kraftfahrzeugs angeordnet ist. Als Bedienelement kann bevorzugt ein Knopf, ein Schalter oder dergleichen herangezogen werden. Selbstverständlich können auch ein Touchscreen oder ähnliche elektronische Eingabemittel als Bedienelement verwendet werden.

Zusätzlich oder alternativ kann es selbstverständlich vorgesehen sein, dass der Drehmomentverlauf von einer Fahrerassistenzeinrichtung aus den mehreren Drehmomentverläufen ausgewählt wird, insbesondere in Abhängigkeit von einer momentanen Fahrsituation des Kraftfahrzeugs. Bevorzugt erkennt die Fahrerassistenzeinrichtung die Fahrsituation beziehungsweise wählt eine passende Fahrsituation aus mehreren unterschiedlichen Fahrsituationen aus. Die Erkennung der momentanen Fahrsituation kann beispielsweise anhand eines Verlaufs der Fahrgeschwindigkeit des Kraftfahrzeugs, einem Lenkwinkel und/oder ähnlichen Zustandsgrößen des Kraftfahrzeugs ermittelt werden.

Eine weitere Ausgestaltung der Erfindung sieht vor, dass der Drehmomentverlauf anhand eines dem Fahrer zugeordneten Identifikationsmerkmals ausgewählt wird. Besonders bevorzugt sind unterschiedlichen Fahrern des Kraftfahrzeugs unterschiedliche Identifikationsmerkmale zugeordnet. Dieses Identifikationsmerkmal kann beispielsweise ein Zündschlüssel oder ein elektronisches Mobilteil, beispielsweise ein Mobiltelefon, sein. Es wird eine Erfassung von in der Nähe des Kraftfahrzeugs befindlichen Identifikationsmerkmale durchgeführt und bei aufgefundenem Identifikationsmerkmal auf den Fahrer geschlossen. Falls dem Fahrer ein Drehmomentverlauf zugeordnet ist, wird dieser ausgewählt und mithin voreingestellt. Wählt der Fahrer nachfolgend einen anderen Drehmomentverlauf aus, so kann dieser als Standardeinstellung für den Fahrer hinterlegt werden, sodass nach einem Abstellen des Kraftfahrzeugs und einem erneuten Starten bei Erkennen des dem Fahrer zugeordneten Identifikationsmerkmals der zuletzt eingestellte Drehmomentverlauf verwendet wird.

Eine vorteilhafte Ausführungsform der Erfindung sieht vor, dass der Verdichter nur dann zum Einstellen des Drehmomentverlaufs mittels des Elektromotors angetrieben wird, wenn die Leistungserhöhung einen Schwellenwert überschreitet. Beispielsweise wird der elektrisch angetriebene Verdichter nicht benötigt, wenn eine Leistungserhöhung durchgeführt wird, bei welcher das von der Brennkraftmaschine zu erzeugende Drehmoment, also das Solldrehmoment, kleiner oder deutlich kleiner ist als das Drehmoment, welches sich für die Istdrehzahl aus dem ausgewählten Drehmomentverlauf ergibt. Üblicherweise wird der elektrisch angetriebene Verdichter nur dann zum Bereitstellen des Verbrennungsfrischgases betrieben, wenn die Leistungserhöhung den Schwellenwert überschreitet, beispielsweise das Solldrehmoment größer oder gleich dem sich aus dem ausgewählten Drehmomentverlauf für die Istdrehzahl ergebenden Drehmoment ist.

Schließlich kann im Rahmen einer weiteren Ausführungsform der Erfindung vorgesehen sein, dass bei Unterschreiten des Schwellenwerts durch die Leistungserhöhung der Brennkraftmaschine von einem Abgasturbolader zuzuführendes Verbrennungsfrischgas mittels einer Bypasseinrichtung um den Verdichter herumgeführt wird. Neben dem elektrisch angetriebenen Verdichter liegt der wenigstens eine Abgasturbolader vor. Der Abgasturbolader ist stromaufwärts des Verdichters angeordnet, sodass der Verdichter strömungstechnisch zwischen dem Abgasturbolader und der Brennkraftmaschine vorliegt.

Bei niedrigen Drehzahlen erreicht der von der Brennkraftmaschine bereitgestellte Abgasmassenstrom nicht aus, um den Abgasturbolader hinreichend schnell zu beschleunigen, um die gewünschte Leistungserhöhung durchführen zu können. Entsprechend wird in diesem Fall der elektrisch angetriebene Verdichter betrieben. Dies ist insbesondere der Fall, falls die Leistungserhöhung den Schwellenwert erreicht beziehungsweise überschreitet. Unterschreitet dagegen die Leistungserhöhung den Schwellenwert, ist also kleiner als dieser, so wird der elektrisch angetriebene Verdichter nicht benötigt. Vielmehr kann die Leistungserhöhung allein mit Hilfe des wenigstens einen Abgasturboladers durchgeführt werden. Um den elektrisch angetriebenen Verdichter deaktivieren zu können, wird daher das Verbrennungsfrischgas mit Hilfe der Bypasseinrichtung um den Verdichter herumgeführt, also von dem Abgasturbolader unter Umgehung des Verdichters der Brennkraftmaschine zugeführt.

Die Erfindung betrifft weiterhin eine Antriebseinrichtung für ein Kraftfahrzeug, insbesondere zur Durchführung des Verfahrens gemäß den vorstehenden Ausführungen, wobei die Antriebseinrichtung eine Brennkraftmaschine und einen mittels eines Elektromotors antreibbaren Verdichter zur Zuführung von Verbrennungsfrischgas zu der Brennkraftmaschine aufweist. Dabei ist vorgesehen, dass die Antriebseinrichtung dazu ausgebildet ist, den Verdichter bei einer Leistungserhöhung der Brennkraftmaschine derart mittels des Elektromotors anzutreiben, dass sich ein aus mehreren unterschiedlichen Drehmomentverläufen ausgewählter Drehmomentverlauf der Brennkraftmaschine über ihrer Drehzahl einstellt.

Auf die Vorteile einer derartigen Ausgestaltung der Antriebseinrichtung beziehungsweise einer derartigen Vorgehensweise wurde bereits eingegangen. Sowohl das Verfahren zum Betreiben der Antriebseinrichtung als auch die Antriebseinrichtung selbst können gemäß den vorstehenden Ausführungen weitergebildet sein, sodass insoweit auf diese verwiesen wird.

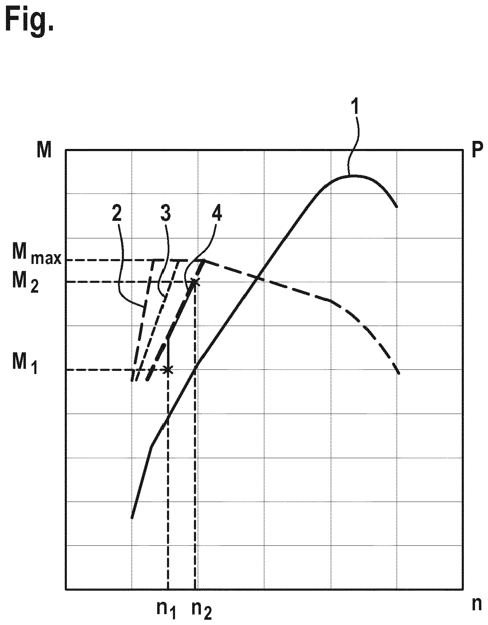

Die Erfindung wird nachfolgend anhand der in der Zeichnung dargestellten Ausführungsbeispiele näher erläutert, ohne dass eine Beschränkung der Erfindung erfolgt. Dabei zeigt die einzige
- Figur: ein Diagramm, in welchem ein Drehmoment und eine Leistung einer Brennkraftmaschine über ihrer Drehzahl aufgetragen ist.

Die Figur zeigt ein Diagramm, in welchem eine Drehzahl M einer Brennkraftmaschine sowie ihre Leistung P über ihrer Drehzahl n aufgetragen sind. Ein Verlauf 1 beschreibt dabei die Leistung P über der Drehzahl, während die Bezugszeichen 2, 3 und 4 unterschiedliche Drehmomentverläufe bezeichnen. Die Brennkraftmaschine ist Bestandteil einer Antriebseinrichtung, welche zudem einen elektrisch angetriebenen Verdichter aufweist. Dem Verdichter ist ein Elektromotor zugeordnet, mittels welchem er angetrieben werden kann, um der Brennkraftmaschine Verbrennungsfrischgas zuzuführen.

Es ist nun vorgesehen, dass der Verdichter bei einer Leistungserhöhung der Brennkraftmaschine derart mittels des Elektromotors angetrieben wird, dass sich ein aus den mehreren unterschiedlichen Drehmomentverläufen 2, 3 und 4 ausgewählter Drehmomentverlauf der Brennkraftmaschine über ihrer Drehzahl n einstellt. In dem hier dargestellten Ausführungsbeispiel beschreibt der Verlauf 2 einen Drehmomentverlauf, welcher einer maximalen Leistungserhöhung entspricht. Der Verlauf 3 zeigt einen Drehmomentverlauf mit einer langsameren Leistungserhöhung als der Verlauf 2 und Verlauf 4 wiederum einen Drehmomentverlauf mit einer langsameren Leistungserhöhung als der Verlauf 3.

Jeder der dargestellten Drehmomentverläufe 2, 3 und 4 erreicht ein Maximaldrehmoment Mₘₐₓ, jedoch bei unterschiedlichen Drehzahlen. So erreicht der Verlauf 3 das Maximaldrehmoment Mₘₐₓ bei einer höheren Drehzahl als der Verlauf 2 und der Verlauf 4 bei einer höheren Drehzahl als der Verlauf 3. Es kann jedoch auch vorgesehen sein, dass wenigstens einer der Drehmomentverläufe 2, 3 und 4 das Maximaldrehmoment nicht erreicht, sondern erst bei einer Drehzahl das jeweils maximale Drehmoment erreicht, welche größer ist als die größte Drehzahl, für welche mittels der Brennkraftmaschine das Maximaldrehmoment erzielt werden kann. In diesem Fall ist also dass im Rahmen des entsprechenden Drehmomentverlaufs maximal erzielbare Drehmoment kleiner als das Maximaldrehmoment.

Während eines Betriebs der Antriebseinrichtung wird der zu verwendende Drehmomentverlauf aus den mehreren Drehzahlverläufen 2, 3 und 4 ausgewählt. In dem hier dargestellten Ausführungsbeispiel wird der Drehmomentverlauf 4 ausgewählt. Zu einem ersten Zeitpunkt entspricht das von der Brennkraftmaschine bereitgestellte Drehmoment M = M₁, während für die Istdrehzahl der Brennkraftmaschine n = n₁ gilt. Nachfolgend soll eine Leistungserhöhung der Brennkraftmaschine vorgenommen werden, nämlich durch eine Erhöhung des Drehmoments M auf das Drehmoment M = M₂. Dieses ist jedoch für die Drehzahl n = n₁ nicht erreichbar, sodass das Drehmoment M sowie die Drehzahl n entlang des Drehmomentverlaufs 4 erhöht werden, um das Drehmoment M = M₂ zu erreichen. Es ist deutlich zu erkennen, dass die Leistungserhöhung dabei von dem Drehmomentverlauf 4 im Vergleich zu einem der anderen Drehmomentverläufe 2 und 3 begrenzt wird. Dies erfolgt vorzugsweise derart, dass ein konstanter Drehmomentanstiegsgradient bis hin zu dem Drehmoment M = M₂ realisiert ist.

Mit dem beschriebenen Verfahren beziehungsweise der beschriebenen Antriebseinrichtung können unterschiedliche Drehmomentverläufe entsprechend der momentanen Fahrsituation eines Kraftfahrzeugs ausgewählt werden. Auf diese Art und Weise kann ein Fahrkomfort des Kraftfahrzeugs deutlich verbessert werden, weil insbesondere ruckartige Beschleunigungen des Kraftfahrzeugs durch entsprechendes Auswählen des Drehmomentverlaufs aus den unterschiedlichen Drehmomentverläufen vermieden werden können.

## Patentansprüche

1. Verfahren zum Betreiben einer Antriebseinrichtung eines Kraftfahrzeugs, die eine Brennkraftmaschine und einen mittels eines Elektromotors antreibbaren Verdichter zur Zuführung von Verbrennungsfrischgas zu der Brennkraftmaschine aufweist, **dadurch gekennzeichnet, dass** der Verdichter bei einer Leistungserhöhung der Brennkraftmaschine derart mittels des Elektromotors angetrieben wird, dass sich ein aus mehreren unterschiedlichen Drehmomentverläufen (2,3,4) ausgewählter Drehmomentverlauf der Brennkraftmaschine über ihrer Drehzahl (n) einstellt.

2. Verfahren nach Anspruch 1, **dadurch gekennzeichnet, dass** einer der Drehmomentverläufe (2,3,4) einer maximalen Leistungserhöhung entspricht.

3. Verfahren nach einem der vorhergehenden Ansprüche, **dadurch gekennzeichnet, dass** wenigstens einer der Drehmomentverläufe (2,3,4), insbesondere alle Drehmomentverläufe (2,3,4), einen konstanten Drehmomentanstiegsgradient bis zu einem Maximaldrehmoment (Mₘₐₓ) aufweist/aufweisen.

4. Verfahren nach einem der vorhergehenden Ansprüche, **dadurch gekennzeichnet, dass** wenigstens einer der Drehmomentverläufe (2,3,4), insbesondere alle Drehmomentverläufe (2,3,4), einen sich in Richtung höherer Drehmomente (M) verringernden oder vergrößernden Drehmomentanstiegsgradient aufweist/aufweisen.

5. Verfahren nach einem der vorhergehenden Ansprüche, **dadurch gekennzeichnet, dass** der Verdichter allein mittels des Elektromotors angetrieben wird.

6. Verfahren nach einem der vorhergehenden Ansprüche, **dadurch gekennzeichnet, dass** der Drehmomentverlauf aus den mehreren Drehmomentverläufen (2,3,4) mittels einer Einstellvorrichtung von einem Fahrer des Kraftfahrzeugs auswählbar ist.

7. Verfahren nach einem der vorhergehenden Ansprüche, **dadurch gekennzeichnet, dass** der Drehmomentverlauf anhand eines dem Fahrer zugeordneten Identifikationsmerkmals ausgewählt wird.

8. Verfahren nach einem der vorhergehenden Ansprüche, **dadurch gekennzeichnet, dass** der Verdichter nur dann zum Einstellen des Drehmomentverlaufs mittels des Elektromotors angetrieben wird, wenn die Leistungserhöhung einen Schwellenwert überschreitet.

9. Verfahren nach einem der vorhergehenden Ansprüche, **dadurch gekennzeichnet, dass** bei Unterschreiten des Schwellenwerts durch die Leistungserhöhung der Brennkraftmaschine von einem Abgasturbolader zuzuführendes Verbrennungsfrischgas mittels einer Bypasseinrichtung um den Verdichter herum geführt wird.

10. Antriebseinrichtung für ein Kraftfahrzeug, insbesondere zur Durchführung des Verfahrens nach einem oder mehreren der vorhergehenden Ansprüche, wobei die Antriebseinrichtung eine Brennkraftmaschine und einen mittels eines Elektromotors antreibbaren Verdichter zur Zuführung von Verbrennungsfrischgas zu der Brennkraftmaschine aufweist, **dadurch gekennzeichnet, dass** die Antriebseinrichtung dazu ausgebildet ist, den Verdichter bei einer Leistungserhöhung der Brennkraftmaschine derart mittels des Elektromotors anzutreiben, dass sich ein aus mehreren unterschiedlichen Drehmomentverläufen (2,3,4) ausgewählter Drehmomentverlauf der Brennkraftmaschine über ihrer Drehzahl (n) einstellt.

## Geänderte Patentansprüche

### Geänderte Patentansprüche gemäss Regel 137(2) EPÜ.

1. Verfahren zum Betreiben einer Antriebseinrichtung eines Kraftfahrzeugs, die eine Brennkraftmaschine und einen mittels eines Elektromotors antreibbaren Verdichter zur Zuführung von Verbrennungsfrischgas zu der Brennkraftmaschine aufweist, **dadurch gekennzeichnet, dass** ein einer Drehmomenthüllkurve entsprechender Drehmomentverlauf aus mehreren unterschiedlichen Drehmomentverläufen (2,3,4) von einer Fahrerassistenzeinrichtung und/oder mittels einer Einstellvorrichtung von einem Fahrer des Kraftfahrzeugs auswählbar ist und/oder anhand eines dem Fahrer zugeordneten Identifikationsmerkmals ausgewählt wird, und dass bei einer Leistungserhöhung der Brennkraftmaschine ein Solldrehmoment ermittelt und auf ein Drehmoment begrenzt wird, das sich für eine Istdrehzahl der Brennkraftmaschine aus dem ausgewählten Drehmomentverlauf ergibt, wobei der Verdichter bei der Leistungserhöhung derart mittels des Elektromotors angetrieben wird, dass sich das Solldrehmoment einstellt.

2. Verfahren nach Anspruch 1, **dadurch gekennzeichnet, dass** einer der Drehmomentverläufe (2,3,4) einer maximalen Leistungserhöhung entspricht.

3. Verfahren nach einem der vorhergehenden Ansprüche, **dadurch gekennzeichnet, dass** wenigstens einer der Drehmomentverläufe (2,3,4), insbesondere alle Drehmomentverläufe (2,3,4), einen konstanten Drehmomentanstiegsgradient bis zu einem Maximaldrehmoment (Mₘₐₓ) aufweist/aufweisen.

4. Verfahren nach einem der vorhergehenden Ansprüche, **dadurch gekennzeichnet, dass** wenigstens einer der Drehmomentverläufe (2,3,4), insbesondere alle Drehmomentverläufe (2,3,4), einen sich in Richtung höherer Drehmomente (M) verringernden oder vergrößernden Drehmomentanstiegsgradient aufweist/aufweisen.

5. Verfahren nach einem der vorhergehenden Ansprüche, **dadurch gekennzeichnet, dass** der Verdichter allein mittels des Elektromotors angetrieben wird.

6. Verfahren nach einem der vorhergehenden Ansprüche, **dadurch gekennzeichnet, dass** der Verdichter nur dann zum Einstellen des Drehmomentverlaufs mittels des Elektromotors angetrieben wird, wenn die Leistungserhöhung einen Schwellenwert überschreitet.

7. Verfahren nach einem der vorhergehenden Ansprüche, **dadurch gekennzeichnet, dass** bei Unterschreiten des Schwellenwerts durch die Leistungserhöhung der Brennkraftmaschine von einem Abgasturbolader zuzuführendes Verbrennungsfrischgas mittels einer Bypasseinrichtung um den Verdichter herum geführt wird.

8. Antriebseinrichtung für ein Kraftfahrzeug, insbesondere zur Durchführung des Verfahrens nach einem oder mehreren der vorhergehenden Ansprüche, wobei die Antriebseinrichtung eine Brennkraftmaschine und einen mittels eines Elektromotors antreibbaren Verdichter zur Zuführung von Verbrennungsfrischgas zu der Brennkraftmaschine aufweist, **dadurch gekennzeichnet, dass** ein einer Drehmomenthüllkurve entsprechender Drehmomentverlauf aus mehreren unterschiedlichen Drehmomentverläufen von einer Fahrerassistenzeinrichtung und/oder mittels einer Einstellvorrichtung von einem Fahrer des Kraftfahrzeugs auswählbar ist und/oder anhand eines dem Fahrer zugeordneten Identifikationsmerkmals ausgewählt wird, und dass die Antriebseinrichtung dazu ausgebildet ist, bei einer Leistungserhöhung der Brennkraftmaschine ein Solldrehmoment zu ermitteln und auf ein Drehmoment zu begrenzen, das sich für eine Istdrehzahl der Brennkraftmaschine aus dem ausgewählten Drehmomentverlauf ergibt, wobei der Verdichter bei der Leistungserhöhung derart mittels des Elektromotors angetrieben wird, dass sich das Solldrehmoment einstellt.
